# EUROPEAN PATENT APPLICATION

(11) **EP 4 653 965 A1**
(43) Date of publication of application: **26.11.2025**
(21) Application number: 25177018.6
(22) Date of filing: 16.05.2025
(51) Int. Cl.: G05B 19/418

(54) **A METHOD FOR GENERATING A SAMPLING SIGNAL**

(30) Priority: 23.05.2024 IT 202400011746
(71) Applicant: Tetra Laval Holdings & Finance S.A., 1009 Pully (CH)
(72) Inventor: CORAZZARI, Gianni, 41123 Modena (IT); CERVO, Andrea, 41123 Modena (IT); PELLACANI, Alex, 41123 Modena (IT); BARBATANO, Domenico, 41123 Modena (IT); GALLUZZI, Fabio, 41123 Modena (IT)
(74) Representative: Tetra Pak Patent Attorneys

(57) **Abstract**

A computer-implemented method (300) for generating a sampling signal comprising a sampling position (106a-c) and a sampling time point for collection of package samples for quality assessment in a system (100) comprising a food processing line (236) and a packaging line (238) is disclosed. The food processing line (236) is arranged to process a food product and the packaging line (238) is arranged to produce packages filled with the food product. The method (300) comprising
obtaining (302) a sampling plan dependent on a trigger event, wherein the trigger event is associated with a production event associated with an equipment switch, a food product batch switch, a packaging material batch switch, an equipment settings switch and/or an equipment state change,
obtaining (303) the trigger event,
determining (304), based on the sampling plan and the trigger event, the sampling time point and the sampling position (106a-c) in the packaging line (238) , and
transferring (306) the sampling signal to a sample collector (212a,b) in the sampling position (106b) downstream a filling machine (102) in the packaging line (238).

## Description

### Technical Field

The invention generally relates to quality assessment of food packages. More particularly, it is related to a method for generating a sampling signal for collection of package samples, a sampling signal generating apparatus and a system.

### Background Art

Packaging is a key part of modern food production from several perspectives. From a food safety perspective, packages act as a barrier that shields a food product held by the packages from external contaminants, including harmful microorganisms. This barrier helps maintain the integrity and safety of the food, reducing the risk of contamination and foodborne illnesses. By way of example, carton-based packages, such as Tetra Brik^{™} marketed by Tetra Pak^{®}, are designed to provide a secure environment for the food product, preserving their quality and safety from production to consumption. From an economic perspective, by creating a protective environment, the packages help extend the shelf life of the food product. By way of example, the carton-based packages are often designed with materials and structures that prevent spoilage by minimizing exposure to oxygen, light, and moisture, which are factors that can accelerate food deterioration. This extension of shelf life not only reduces food waste but also allows consumers to enjoy fresher products for a longer period. From an environmental perspective, the carton-based packages offer environmental advantages compared to other packaging materials. They are lightweight and typically require fewer resources to produce, reducing energy consumption and greenhouse gas emissions during manufacturing and transportation. Additionally, many carton packages are recyclable or made from renewable materials, contributing to efforts to reduce environmental impact and promote sustainability in the food industry.

To make sure that the packages are providing adequate shielding, sometimes referred to as package integrity, quality assessment of the packages produced is in most cases performed diligently. Typical package quality assessment systems used today are based on that package samples are collected at regular intervals and that these packages are quality controlled according to set schemes. Since the presence of some microorganisms in the sample packages may be difficult to detect shortly after these have been filled and sealed, it is common practice to incubate some of the sample packages for a period of time and thereafter assess the packages.

Several techniques for assessing packaging quality have been presented. For instance, in EP 3 748355 B1 it is presented a method for quality assessing packages in which quality assessment instructions are sent to operators based on their current location. In this way a more time efficient quality assessment process can be achieved. EP 3 716 173 A1 is related to the package quality assessment aspect of recalling packages that are not fulfilling set requirements. In short, in this document, it is presented an approach in which the most recent logistic node linked to a specific package is stored such that efficient recalling can be achieved.

Even though the documents referred to above successfully improve package quality assessment procedures, there is room for even further improvement.

### Summary

It is an object of the invention to at least partly overcome one or more of the above-identified limitations of the prior art. In particular, it is an object to provide a method and apparatus for generating a sampling signal based on a trigger event using a sampling plan. The sampling plan may in this context be seen as a scheme for associating one or more trigger events to different sampling signals such that different changes in the system may be captured such that in turn the sampling of packages for quality assessment can be adapted. By having this approach, the sampling process of packages can be improved such that in turn the quality assessment overall can be improved, both in terms of time efficiency and cost efficiency.

The sampling signal may comprise a sampling position as well as a sampling time point, that is, where in the system the package samples are to be collected and also when in time these packages are to be collected. Having the sampling plan in combination with a system that can trace the food product in a food processing line, forming part of the system, and the food product and the packages in a packaging line, also forming part of the system, it is made possible to provide for that relevant packages are collected and used in the quality assessment process.

According to a first aspect it is provided a computer-implemented method for generating the sampling signal comprising the sampling position and the sampling time point for collection of package samples for quality assessment in the system comprising the food processing line and the packaging line. The food processing line is arranged to process a food product and the packaging line is arranged to produce packages filled with the food product. The method comprises obtaining a sampling plan dependent on the trigger event, wherein the trigger event may be associated with a production event associated with an equipment switch, a food product batch switch, a packaging material batch switch, an equipment settings switch and/or an equipment state change, obtaining the trigger event, determining, based on the sampling plan and the trigger event, the sampling time point and the sampling position in the packaging line, and transferring the sampling signal to a sample collector in the sampling position downstream a filling machine in the packaging line.

An advantage with having a trigger event-based sampling system is that a preciseness in terms of sample selection can be improved, that is, the likelihood of collecting sample packages that are reflecting a change in the system can be improved. As stated above, the trigger event may be associated with the equipment switch, e.g. switching from using one tank to another in the system, the food product batch switch, e.g. switching from a milk batch from one farm to a batch from another farm, the packaging material batch switch, e.g. switching from one reel of packaging material to another, the equipment settings switch, e.g. switching from using a settings configuration of an aseptic steam barrier to another, wherein such settings change may be triggered by a change in the surrounding environment of the packaging machine, and/or the equipment state change, e.g. a separator in the food processing line changing from cleaning-in-place state to production state. By registering the different trigger events and using these, either separately or in combination, for determining the sampling position and the sampling time point, it is made possible to be very specific in the sampling selection with the effect that the quality assessment can be improved.

The system may comprise parallel pieces of equipment, wherein the trigger event comprises the equipment switch and that this comprises a switch from one of these parallel pieces to another.

To provide for that continuous operation is possible, it is today known to have parallel tanks, parallel homogenizers etc such that the food production does not need to be closed down during cleaning or service. Changing from one piece of equipment to another may be an event relevant for the quality assessment. For instance, in case the system is changing from using a first tank to using a second tank, and the second tank has been cleaned, there may be a reason to collect samples from a first sequence of packages comprising the food product that was held in this second tank to assure that the cleaning was adequately performed. Since different systems operate in different ways and also since different food products may be sensitive to different trigger events in different ways, the sampling plan may be adapted to meet such needs by allowing the operator or other personnel to associate different trigger events to different sampling positions and sampling time points.

The packaging line may comprise the filling machine, arranged to produce the packages filled with the food product, and downstream equipment arranged to further process the packages produced by the filling machine, wherein the downstream equipment may comprise one or more capping apparatuses arranged to place caps on the packages, one or more straw applicators arranged to place straws on the packages, one or more cardboard packers arranged to place multiple packages on a cardboard tray, one or more film wrappers arranged to wrap together the multiple packages into a wrapped bundle, and/or a palletizer as well as conveyor systems connecting different pieces of the downstream equipment and the filling machine.

The trigger event may be food processing line and/or packaging line agnostic.

An advantage with having the trigger event arranged in this way is that the sampling plans may be easily set by operators or other personnel even though these persons are not familiar with the details of how the system is set up.

The equipment state change may comprise a production start of the filling machine or a production stop of the filling machine.

One reason for keeping track of the production start and/or the production stop is that these are events of the system that may impact the quality of the packages produced and/or the food product processed. For instance, sterilization of the packaging material may need a ramp up time before the packages produced fulfill set quality requirements.

The filling machine may be a roll-fed filling machine arranged to receive a web of packaging material, to form the web into a tube, to fill the tube with the food product, and to form the packages from a lower end of the tube, wherein the filling machine may comprise an automatic splicing unit arranged to attach subsequent webs together during a splicing event such that continuous operation during web replacement can be achieved, wherein the packaging material batch switch may comprise the splicing event.

Switching from one reel of packaging material to another is beneficial from the perspective that continuous operation of the filling machine may be achieved. An advantage with using the splicing event as the trigger event is that the sampling process can be aligned with the splicing process, which results in that the operation of the system, in particular the packaging line, can be improved further.

The filling machine may be the roll-fed filling machine, wherein the filling machine may comprise a strip applicator arranged to apply a strip onto a longitudinal sealing of the tube such that the food product is prevented from being in direct contact with longitudinal edges of the web of packaging material, wherein the packaging material batch switch may comprise a switch from one roll of strip material to another roll of strip material.

In line with the advantages mentioned above with respect to using the splicing event as the trigger event, the packaging material batch switch may also relate to the strip as described above. Unlike the splicing event, which can easily be detected by that one of the packages produced will have a splicing joint, a strip batch change will not be visible from an outside of the packages produced. Therefore, having the trigger event based on the strip batch switch is that this event will, by way of example, be difficult, possibly impossible, to detect by using a camera-based quality assessment system placed downstream the filling machine.

The filling machine may be arranged to produce 7 000 packages or more per hour.

To improve cost-efficiency, modern packaging lines are often designed to produce several thousands of packages per hour. As an effect, insufficient quality in such systems result in that losses quickly pile up. Thus, by using the approach suggested herein in systems made to produce 7000 packages or more, savings in terms of reduced losses may be substantial.

The method may further comprise printing, by using a sample identification printer, identification marks on a sub-set of the packages produced by the filling machine after the trigger event occurred, wherein the sample identification printer may be placed downstream the filling machine and upstream the sample position, capturing, by using a camera-based monitoring system, image data depicting the packages, wherein the camera-based monitoring system may be placed downstream the sample identification printer and upstream the sample collector, in case the identification marks are identified in the image data by the camera-based monitoring system, transmitting a sample collection signal from the camera-based monitoring system to the sample collector, and upon reception of the sample collection signal, collecting the sub-set of packages by the sample collector.

An advantage with having the sample identification printer arranged for printing the identification marks as described above is that tracing of the packages and also the food product held in the packages can be improved. Even though the food product and the packages can be traced by using flow data and image data, respectively, there is a risk, in particular during machine stops, that the packages and/or the food product cannot be followed accurately. By having a set up including the sample identification printer and the camera-based monitoring system, the food product and the packages can be traced using e.g. flow data up until reaching the sample identification printer and from thereon the packages can be traced by using the identification marks. The identification marks can also be used during the quality assessment process, e.g. to keep track of the packages during incubation.

The trigger event may comprise a first and a second trigger sub-event, wherein the first trigger sub-event is associated with a first trigger sub-event criterion and the second sub-event is associated with a second trigger sub-event criterion, wherein the trigger event is occurring if the first trigger sub-event criterion is met followed by that the second sub-event criterion is met, wherein the first and second trigger event criteria may be associated to different pieces of equipment in the system.

Since the system may be a complex system with several pieces of equipment, there may be situations in which sampling is needed that are related to a chain of events. By having the trigger event comprising a number of such sub-events, such chain of events situations can be detected and sampling may be made upon detecting such situations.

The step of determining the sampling time point and the sampling position may comprise the sub-step of applying a machine learning model, wherein the machine learning model receives as input the trigger event and outputs a prediction of the sampling position and the sampling time point in the packaging line.

As an alternative to having the sample time point and the sampling position manually linked to the trigger event, a machine learning model may be used for linking different trigger events to sampling positions and sampling time points. This is particularly relevant in complex systems with a multitude of different pieces of equipment and/or for systems that are used for processing and packaging a large variety of different food products.

The packaging line may comprise a package incubation station in which an incubation sub-set of the packages are stored for an incubation time period, wherein the sampling position is in or downstream the package incubation station.

The sampling process may comprise incubation of packages. Having the package incubation station in or downstream the sampling position provides for that the sample packages may be collected and incubated efficiently.

According to a second aspect it is provided a sampling signal generating apparatus comprising a processing unit configured to carry out the method according to the first aspect.

According to a third aspect it is provided a system comprising the sampling signal generating apparatus according to the second aspect.

According to a fourth aspect it is provided a computer program product, loadable in a memory of at least one processing unit and comprising instructions suitable for performing the steps of the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a packaging line of a system.
Fig. 2 schematically illustrates a system comprising a food processing line and the packaging line.
Fig. 3 is a flowchart illustrating a method for generating a sampling signal for collection of package samples.

### Detailed Description

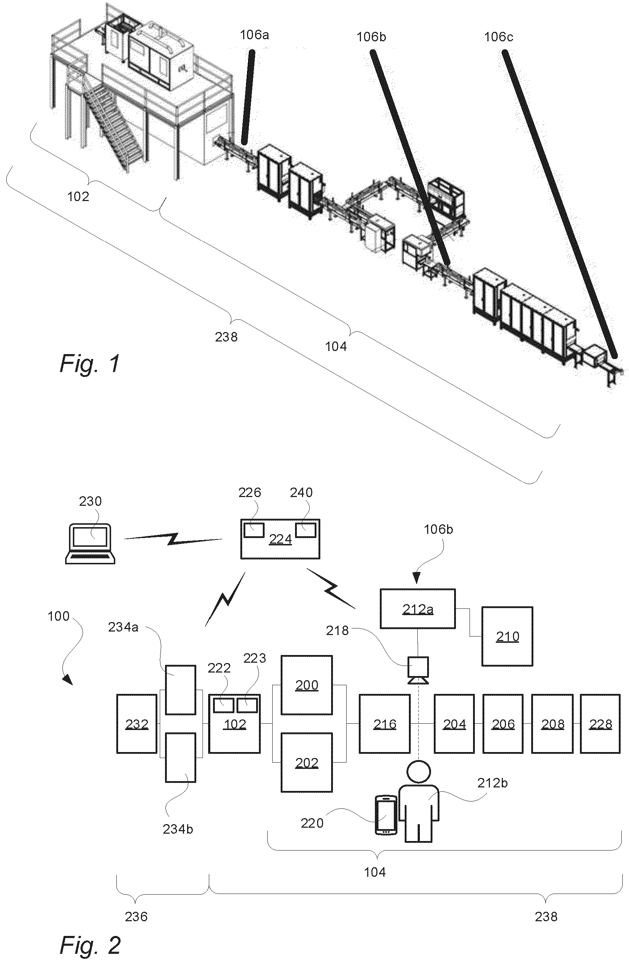

Fig. 1 illustrates, by way of example, part of a system 100 for producing packaged food products. More particularly, it is illustrated a packaging line 238 comprising a filling machine 102 and downstream equipment 104. In this particular example, the filling machine 102 is a roll-fed packaging machine arranged to produce carton-based packages. In terms of package quality assessment, package samples are collected at different sampling positions 106a-c. By collecting at these different sampling positions 106a-c along the packaging line 238, it is made possible to assess the packages at different stages and thereby identifying problems more efficiently. For instance, in case a piece of downstream equipment between two sampling positions are not performing as expected, this may be identified efficiently by assessing packages collected at the two different sampling positions.

Fig. 2 illustrates schematically the system 100 comprising the packaging line 238 as well as a food processing line 236 arranged upstream the packaging line 238. The packaging line 238 may comprise the filling machine 102 and the downstream equipment 104 in line with the example illustrated in fig. 1. The downstream equipment 104 may comprise various pieces of equipment depending on the packages to be produced. For instance, family packages may be equipped with caps and to meet this the downstream equipment 104 may comprise a capping apparatus 200. On the other hand, if portion packages are to be produced, these may be equipped with straws and in such case the downstream equipment 104 may comprise a straw applicator 202. In case the system 100 is to be arranged to produce both family and portion packages, this may, as illustrated, comprise both the capping apparatus 200 and the straw applicator 202 arranged in parallel. Further, the downstream equipment 104 may comprise a cardboard packer 204, a film wrapper 206 and a palletizer 208. Even though not illustrated, a conveyor system may be used for transporting the packages between the different pieces of equipment in the downstream equipment 104.

The downstream equipment 104 may also comprise a package incubation station 210 associated to a sample collector 212a,b. The sample collector 212a may be a machine, such as a robotic arm, arranged to capture sample packages from the system 100 at one of the sampling positions 106b. As an alternative, the sample collector 212b may be an operator that is instructed to collect the sample packages from the system 100. Once having collected the sample packages, different quality assessment steps are performed. One such step may include incubating the sample packages to learn about a microbiological content of the food product and/or an integrity of the sample packages. As illustrated, if the sample collector 212a is arranged as the robotic arm or other machine-based collector arrangement, the sample packages may be introduced into the package incubation station 210 automatically, i.e. without any hands-on involvement by the operator. Another option is however that the operator manually place the sample packages in the package incubation station 210 once these packages are collected.

The collection of the sample packages may be triggered by a trigger event. For instance, if there is a production event in the form of a switch from one food product batch to another, e.g. milk produced at one farm and milk produced at another farm, this may render the trigger event. When and how to collect the sample packages may depend on this trigger event. According to one example, it is possible to determine the sampling position 106b and a sampling time point based on a trigger time point of the trigger event and an offset. Since a speed of the food processing line 236 and the packaging line 238 may vary over time, the sample time point may be determined dynamically, that is, taking into account that the speed of the system may vary over time. In addition, different trigger events may result in different number of sample packages.

To increase a likelihood that the sample packages covers the production event, an option is to have a sample identification printer 216 provided among the downstream equipment 104. The sample identification printer 216 may be placed downstream the filling machine 102 and may be arranged to print identification marks on a sub-set of the packages. By having this sub-set of packages marked, it is made possible to identify this sub-set of packages downstream the sample identification printer 216 by a camera-based monitoring system 218. This system may, once the sub-set of packages is identified, transmit a sample collection signal to the sample collector 212a,b such that the sub-set of packages can be collected from the system 100 as the sample packages. As illustrated and discussed above, the sample collector 212a,b may be a machine, such as a robot, or an operator, that is, a human being. In the latter case, instructions to collect packages, that is, the sample collection signal, may be provided to the operator via an operator device 220, e.g. a mobile phone or a tablet.

In case the filling machine 102 is a roll-fed packaging machine for producing carton-based packages, this may comprise an automatic splicing unit 222. The purpose of this unit is to provide a continuous operation of the filling machine even though a packaging material reel switch is taking place, or more generally a packaging material batch switch. The continuous operation is achieved by that a web of a reel to be replaced is attached to a web of a reel to be introduced into the filing machine, thereby providing for that a continuous web is provided, and in turn a continuous tube is provided. The event of attaching the two webs together is herein referred to as a splicing event. This event is an example of a trigger event for sampling of packages. One reason for this is that the package provided with the splicing sealing, that is, a splicing joint between the two webs, is most often to be discarded, but could also be of interest from a quality assessment perspective to assure that the splicing was adequately made. In addition to the package comprising the splicing joint, packages following this splicing joint package may also be of interest for quality assessment to assure that food safety is upheld also for the packaging material from the reel being introduced.

Another example of the packaging material batch switch that may occur in the filing machine 102 is a switch from one reel of strip to another. The strip, often a plastic material web, is applied on an inside of the tube such that a carton-mid layer of the packaging material is prevented from being negatively affected by the food product in the tube. In a similar manner as for the automatic splicing unit 222, there is a splicing event taking place and this event is an example of the packaging material batch switch. By using this event as a trigger for the sampling, both in terms of the sampling position and the sampling point of time, a more precise and efficient quality assessment can be achieved.

Information about the packaging material batch switch and other examples of the trigger event may be transmitted from the different pieces of equipment to a sampling signal generating apparatus 224. This apparatus may be a computer placed on site or it may be remotely placed. Further, the apparatus may also be embodied as a distributed system with parts of the system on site and parts of the system placed externally. As illustrated, the apparatus 224 may comprise a processing unit 226 comprising one or more memories and one or more processors.

The sampling plan may be provided to the sampling plan generating apparatus 224 from a computer 230 initiating the sampling plan. By having the computer 230 provided with a user interface, it is possible for an operator or other person being responsible for the system 100 to set up the sampling plan or provide input to the sampling plan. As illustrated, the sampling signal generating apparatus 224 may comprise a machine learning model 240, e.g. a neural network, that can be trained such that the sampling position and the sampling point of time can be predicted based on the trigger event. A benefit with such approach is that a vast amount of parameter settings in the different pieces of equipment, properties of the food product, properties of the different packaging materials, etc can be taken into account for determining the sampling position and/or the sampling time point for a given trigger event.

As illustrated, in this context, the downstream equipment 104 may include a warehouse 228, that is, a storage area in which the packages are placed after being produced. One reason for including the warehouse 228 in the downstream equipment and also in the quality assessment is that a package integrity issue may be easier to detect after some time when consequences of this issue may be more apparent than shortly after the packages are produced.

Further, the system 100 is not limited to the packaging line 238 but is also comprising a food processing line 236. In case the system 100 is part of a dairy, the food processing line 236 may comprise one or more separators, one or more homogenizers, one or more heat exchangers for heat treating the milk, etc. By keeping track of a configuration of the food processing line over time, e.g. which pieces of equipment that are activated at different points of time, and also keeping track of product flows over time, it is possible trace the food product throughout the food processing line 236. In addition to being related to the packaging material batch switch, the trigger event may also be related to a food product batch switch. Still an option is that the trigger event is related to an equipment switch. An example of such trigger switch is when the food product is changed from being fed from a first tank 234a to a second tank 234b into the filling machine.

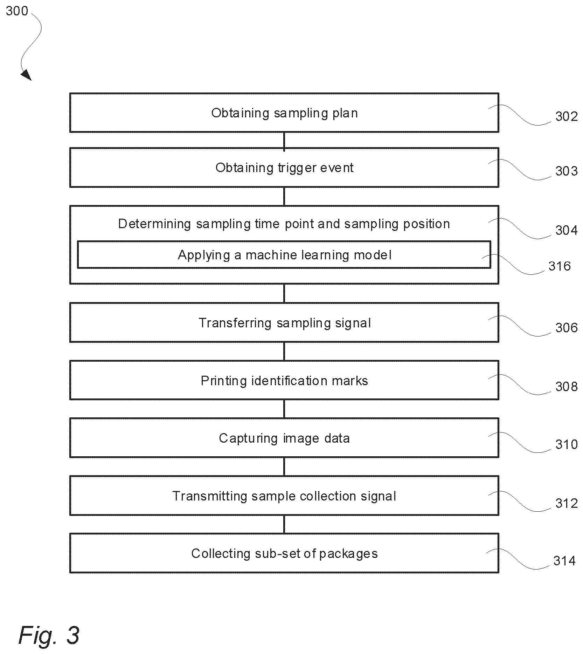

Fig. 3 is a flowchart illustrating a computer-implemented method 300 for generating the sampling signal comprising the sampling position 106a-c and the sampling time point for collection of package samples for quality assessment in the system 100 comprising the food processing line 236 and the packaging line 238. In line with the description above, the food processing line 236 is arranged to process the food product and the packaging line 238 is arranged to produce the packages filled with the food product. The method 300 comprises obtaining 302 the sampling plan depending on the trigger event, wherein the trigger event is associated with the production event associated with an equipment switch, a food product batch switch, a packaging material batch switch, an equipment settings switch and/or an equipment state change, obtaining 303 the trigger event, determining 304, based on the sampling plan, the sampling time point and the sampling position 106a-c in the packaging line 238, and transferring 306 the sampling signal to the sample collector 212a,b in the sampling position 106b downstream the filling machine 102 in the packaging line 238. Optionally, the method may comprise printing 308, by using the sample identification printer 216, the identification marks on the sub-set of the packages produced by the filling machine 102 after the trigger event occurred, wherein the sample identification printer 216 is placed downstream the filling machine 102 and upstream the sample position 106a-c, capturing 310, by using the camera-based monitoring system 218, image data depicting the packages, wherein the camera-based monitoring system 218 is placed downstream the sample identification printer 216 and upstream the sample collector 212a,b, in case the identification marks are identified in the image data by the camera-based monitoring system 218, transmitting 312 a sample collection signal from the camera-based monitoring system 218 to the sample collector 212a,b, and upon reception of the sample collection signal, collecting 314 the sub-set of packages by the sample collector 212a,b.

The step of determining 304 the sampling time point and the sampling position may comprise the sub-step of applying 316 the machine learning model 240, wherein the machine learning model receives as input the trigger event and outputs a prediction of the sampling position and the sampling time point in the packaging line.

As described above, the approach described herein may be described as that the system 100 tracks when a specific event is taking place, such as when a particular batch ends. For instance, such event may be that the system is changing from handling a plain milk batch to handling a chocolate milk batch. Such switch may be relevant to keep track of such that it can be assured that the first packages with chocolate milk is quality assessed to make sure that these fulfill the requirements of the chocolate milk, i.e. that a mix phase between the two batches has been contained within set thresholds or ranges. Another example of such event is a switch from one aseptic tank to another placed upstream the filling machine. By having the system covering both the food processing line and the packaging line, it is made possible with the approach suggested herein to link events occurring in the processing line with quality assessment taking place in the packaging line.

Once the event is detected, information may be sent to an automation system and/or a quality management system (QMS) such that the event can be connected to packages produced by the filing machine. By being able to make this link, a more reliable traceability can be achieved. For instance, in case the event is the aseptic tank switch, this event may take place close to the filling machine providing for that the tracing of the product achieved by keeping track of valve settings, flow measurements, etc can be limited to a relatively short distance. Once having the event linked to the packages, provided that these are either physically marked by the ID marks or the like, or followed by using camera-based monitoring systems or the like, the traceability can namely be made more accurately compared to tracing the food product in pipes, tanks or processing equipment, i.e. tracing the food product upstream the filling machine. Further, by individually following the sample packages downstream the filling machine it is also made possible to trace the sample packages, and the food product held inside, compared to indirectly tracing by keeping track of conveyor system speeds etc.

The sampling plan can comprise information on where, when and how the sample packages are to be collected. In this way, by being able to create the link between the event and the sample packages, it is made possible to pinpoint certain events in the quality assessment. For instance, in case there is a need to focus the quality assessment towards the aseptic tank switch, which may by way of example be relevant if valves of the aseptic tanks have recently been serviced, it is made possible with the approach described herein to use the tank switch as the trigger event, and by using the sampling plan obtain the information about when and where the sample packages are to be collected. In addition to when and where the sample packages are to be collected, the sampling plan may also comprise information about how the sample packages are to be assessed. For instance, this may include immediate checks, such as checking color, flavor, density and/or coagulation of the food product. In case there is any deviations found when performing the immediate checks, follow-up checks may be performed. Further, if the deviations are detected, the sampling plan may also include how this is to be escalated. For instance, in case a color deviation is identified, this may, according to the sampling plan, trigger that a notification is sent to a manager of the system and/or the operator.

From the description above follows that, although various embodiments of the invention have been described and shown, the invention is not restricted thereto, but may also be embodied in other ways within the scope of the subject-matter defined in the following claims.

## Claims

1. A computer-implemented method (300) for generating a sampling signal comprising a sampling position (106a-c) and a sampling time point for collection of package samples for quality assessment in a system (100) comprising a food processing line (236) and a packaging line (238), wherein the food processing line (236) is arranged to process a food product and the packaging line (238) is arranged to produce packages filled with the food product, said method (300) comprising
obtaining (302) a sampling plan dependent on a trigger event, wherein the trigger event is associated with a production event associated with an equipment switch, a food product batch switch, a packaging material batch switch, an equipment settings switch and/or an equipment state change,
obtaining (303) the trigger event,
determining (304), based on the sampling plan and the trigger event, the sampling time point and the sampling position (106a-c) in the packaging line (238) , and
transferring (306) the sampling signal to a sample collector (212a,b) in the sampling position (106b) downstream a filling machine (102) in the packaging line (238).

2. The method according to claim 1, wherein the system (100) comprises parallel pieces of equipment, wherein the trigger event comprises the equipment switch and that this comprises a switch from one of these parallel pieces to another.

3. The method according to claim 2, wherein the packaging line (238) comprises the filling machine (102), arranged to produce packages filled with the food product, and downstream equipment (104) arranged to further process the packages produced by the filling machine (102), wherein the downstream equipment (104) comprises one or more capping apparatuses (200) arranged to place caps on the packages, one or more straw applicators (202) arranged to placed straws on the packages, one or more cardboard packers (204) arranged to place multiple packages on a cardboard tray, one or more film wrappers (206) arranged to wrap together the multiple packages into a wrapped bundle, and/or a palletizer (208) as well as conveyor systems connecting different pieces of the downstream equipment (104) and the filling machine (102).

4. The method according to any one of the preceding claims, wherein the trigger event is food processing line and/or packaging line agnostic.

5. The method according to any one of the preceding claims, wherein the equipment state change comprises a production start of the filling machine (102) or a production stop of the filling machine (102).

6. The method according to any one of the preceding claims, wherein the filling machine (102) is a roll-fed filling machine arranged to receive a web of packaging material, to form the web into a tube, to fill the tube with the food product, and to form the packages from a lower end of the tube, wherein the filling machine (102) comprises an automatic splicing unit (222) arranged to attach subsequent webs together during a splicing event such that continuous operation during web replacement can be achieved, wherein the packaging material batch switch comprises the splicing event.

7. The method according to any one of the preceding claims, wherein the filling machine (102) is the roll-fed filling machine, wherein the filling machine (102) comprises a strip applicator (223) arranged to apply a strip onto a longitudinal sealing of the tube such that the food product is prevented from being in direct contact with longitudinal edges of the web of packaging material, wherein the packaging material batch switch comprises a switch from one roll of strip material to another roll of strip material.

8. The method according to any one of the preceding claims, wherein the filling machine (102) is arranged to produce 7 000 packages or more per hour.

9. The method according to any one of the preceding claims, further comprising
printing (308), by using a sample identification printer (216), identification marks on a sub-set of the packages produced by the filling machine (102) after the trigger event occurred, wherein the sample identification printer (216) is placed downstream the filling machine (102) and upstream the sample position (106a-c),
capturing (310), by using a camera-based monitoring system (218), image data depicting the packages, wherein the camera-based monitoring system (218) is placed downstream the sample identification printer (216) and upstream the sample collector (212a,b),
in case the identification marks are identified in the image data by the camera-based monitoring system (218), transmitting (312) a sample collection signal from the camera-based monitoring system (218) to the sample collector (212a,b), and
upon reception of the sample collection signal, collecting (314) the sub-set of packages by the sample collector (212a,b).

10. The method according to any one of the preceding claims, wherein the trigger event comprises a first and a second trigger sub-event, wherein the first trigger sub-event is associated with a first trigger sub-event criterion and the second sub-event is associated with a second trigger sub-event criterion, wherein the trigger event is occurring if the first trigger sub-event criterion is met followed by that the second sub-event criterion is met, wherein the first and second trigger event criteria are associated to different pieces of equipment in the system ().

11. The method according to any one of the preceding claims, wherein the step of determining the sampling time point and the sampling position comprises the sub-step of applying (316) a machine learning model (240), wherein the machine learning model receives as input the trigger event and outputs a prediction of the sampling position and the sampling time point in the packaging line.

12. The method according to any one of the preceding claims, wherein the packaging line (100) comprises a package incubation station (210) in which an incubation sub-set of the packages are stored for an incubation time period, wherein the sampling position (106a-c) is in or downstream the package incubation station (210).

13. A sampling signal generating apparatus (224) comprising a processing unit (226) configured to carry out the method according to any of claims 1 to 12.

14. A system (100) comprising the sampling signal generating apparatus (224) according to claim 13.

15. A computer program product, loadable in a memory of at least one processing unit and comprising instructions suitable for performing the steps of the method (300) according to any of the claims 1 to 12.
